# EUROPÄISCHE PATENTSCHRIFT

(11) **EP 0 580 835 B1**
(45) Veröffentlichungstag und Bekanntmachung des Hinweises auf die Patenterteilung: **04.12.1996**
(21) Anmeldenummer: 93903142.3
(22) Anmeldetag: 16.02.1993
(51) Int. Cl.: B65G 33/12, B65G 65/46

(54) **Fördereinrichtung zur Dosierung eines Schüttgutes**
Feeding device for measured quantities of granular material
Dispositif d'alimentation pour le dosage d'un produit granulair

(30) Priorität: 18.02.1992 DE 4204852
(43) Veröffentlichungstag der Anmeldung: 02.02.1994
(73) Patentinhaber: DANAG AG, CH-8117 Fällanden (CH)
(72) Erfinder: GUBLER, Daniel, CH-8117 Fällanden (CH)
(74) Vertreter: Altenburg, Udo, Dipl.-Phys.
(86) Internationale Anmeldenummer: CH9300040
(87) Internationale Veröffentlichungsnummer: WO9315985

(56) Entgegenhaltungen:
- EP-A- 0 112 398
- WO-A-91/15412
- DE-A- 2 618 377
- US-A- 2 934 201
- Patent Abstracts of Japan, Band 11, Nr 296, M-627,, Zusammenfasung von JP, 62- 88724 (TAKEDA CHEM IND LTD),

## Beschreibung

### Technisches Gebiet

Die vorliegende Erfindung betrifft eine Fördereinrichtung gemäss Oberbegriff des Anspruchs 1.

### Stand der Technik

Zur Förderung einer dosierten Menge eines Schüttgutes werden üblicherweise Förderschnecken oder Vibrationsvorrichtungen eingesetzt.
Förderschnecken benötigen zur Sicherstellung ihrer Funktion eine Mindeststeigung der Schnecke sowie einen Mindestdurchmesser des Förderrohres. Die zu dosierende Menge lässt sich vorzugsweise durch Aenderung der Drehzahl der Schnecke erreichen. Die minimal erzielbare Fördermenge mit solchen Förderschnecken ist indessen nicht für jede Aufgabenlösung zureichend. Darüber hinaus ist festzustellen, dass die kleinstmögliche Steigung der Schnecke für viele Mengenvorgaben viel zu gross ist. Ferner gilt zu bedenken, dass Förderschnecken, insbesondere wenn die Förderung eines pulverförmigen Schüttgutes bewerkstelligt werden muss, dazu neigen, festhaftende Ablagerungen entlang der Förderfläche der Schnecke zu bilden.

Vibrationsvorrichtungen zur Dosierung einer kleinen Menge eines Schüttgutes weisen die potentielle Gefahr auf, dass die Dosierung über die Zeit nicht im erwünschten Masse gleichmässig ausfällt. Des weiteren ist festzustellen, dass die Vibrationen dazu führen können, dass das Schüttgut, insbesondere wenn es sich dabei um pulverförmige, mit einer Remanzfeuchtigkeit behaftete Schüttgüter handelt, Klumpen bildet, welche einer genauen Dosierung entgegenstehen.

Aus DE-A-26 18 377 ist eine Fördervorrichtung für kleinstückiges Material bekanntgeworden. Die Fördervorrichtung besteht aus einem Hohlzylinder mit daran angeschlossener Zuführeinrichtung für das Material und mit einem darin angeordneten Förderorgan sowie mit einer eine Drehbewegung zwischen Hohlzylinder und Förderorgan erzeugenden Einrichtung. Der Hohlzylinder weist innenseitig ein Gewinde auf, wobei das Förderorgan sich über wenigstens einen Teil der Axiallänge dieses Gewindes erstreckt. Das zu fördernde Material wird in den Hohlzylinder mit innenseitigem Gewinde eingegeben, und in diesem von dem Förderorgan erfasst, welches eine derartige Form besitzt, dass eine Materialbewegung längs der Achse des Hohlzylinders, jedoch praktisch ohne Verdrehung um diese Achse gegenüber dem Förderorgan selbst, erzielbar ist. Durch die Relativbewegung zwischen Förderorgan und Hohlzylinder wird das Material längs des Hohlzylinders unter Verdrehung gegenüber dem Hohlzylinder selbst vorgeschoben. Diese Fördervorrichtung eignet sich allenfalls zur Förderung eines kleinstückigen Materials, auf dessen Struktur beim Förderungsprozess nicht Rücksicht genommen werden muss. Eine genaue Mengendosierung pro Zeiteinheit ist mit einer solchen Fördervorrichtung nicht möglich.

### Darstellung der Erfindung

Hier will die Erfindung Abhilfe schaffen. Der Erfindung, wie sie in den Ansprüchen gekennzeichnet ist, liegt die Aufgabe zugrunde bei einer Fördereinrichtung der eingangs genannten Art eine Ausbildung vorzuschlagen, welche allein durch eine Drehzahlvariierung eine maximierte Bandbreite der Mengendosierung bei minimierter Gewichtsungenauigkeit pro Zeiteinheit zu erfüllen vermag.

Die wesentlichen Vorteile der Erfindung sind darin zu sehen, dass die Einrichtung von einfachster und robuster Bauweise ist, sich leicht mit einem Motor verbinden lässt und bei allen bekannten Schüttgütern einsetzbar ist. Lediglich, durch Variierung der Drehzahl lässt sich mit ein und derselben Einrichtung eine Mengendosierung von grösster Bandbreite und maximierter Gewichtsgenauigkeit pro Zeiteinheit erzielen. Bei pulverförmigen Schüttgütern kann eine Bandbreite von 0,05 - 1000 1/Std. mit der erwünschten Genauigkeit gewährleistet werden.

Ein weiterer wesentlicher Vorteil der Erfindung ist darin zu sehen, dass sich die Einrichtung während des Betriebes inhärent fortlaufend reinigt, d.h., es bilden sich keine störenden Rückstände im Förderungsmechanismus, was ein wesentlicher Grund dafür ist, dass die erbrachte Gewichtsgenauigkeit pro Zeiteinheit über die gesamte Betriebsdauer, auch bei einem kontinuierlichen Mehrschichtbetrieb, aufrechterhalten werden kann.

Ferner ist ein weiterer Vorteil der Erfindung darin zu sehen, dass die Fördereinrichtung äusserst kompakt gebaut ist, weshalb sie problemlos, auch bei platzmässig beschränkten Förderungskanalen, zum Einsatz kommen kann.

Vorteilhafte, zweckmässige Weiterbildungen der erfindungsgemässen Aufgabenlösung sind in den abhängigen Ansprüchen gekennzeichnet.

Im folgenden wird anhand der Zeichnungen ein Ausführungsbeispiel der Erfindung näher erläutert. Alle für das unmittelbare Verständnis der Erfindung nicht erforderlichen Elemente sind fortgelassen. In den verschiedenen Figuren sind gleiche Elemente jeweils mit den gleichen Bezugszeichen versehen.

### Kurze Beschreibung der Zeichnungen

Es zeigt:
- Fig. 1: einen rotierenden Teil als Bestandteil der Einrichtung,
- Fig. 2: einen feststehenden Teil als Bestandteil der Einrichtung,
- Fig. 3: eine Abwicklung des feststehenden Teils und
- Fig. 4: eine Einrichtung zur Förderung eines Schüttgutes im einsatzfähigen Zustand.

### Wege zur Ausführung der Erfindung, gewerbliche Verwendbarkeit

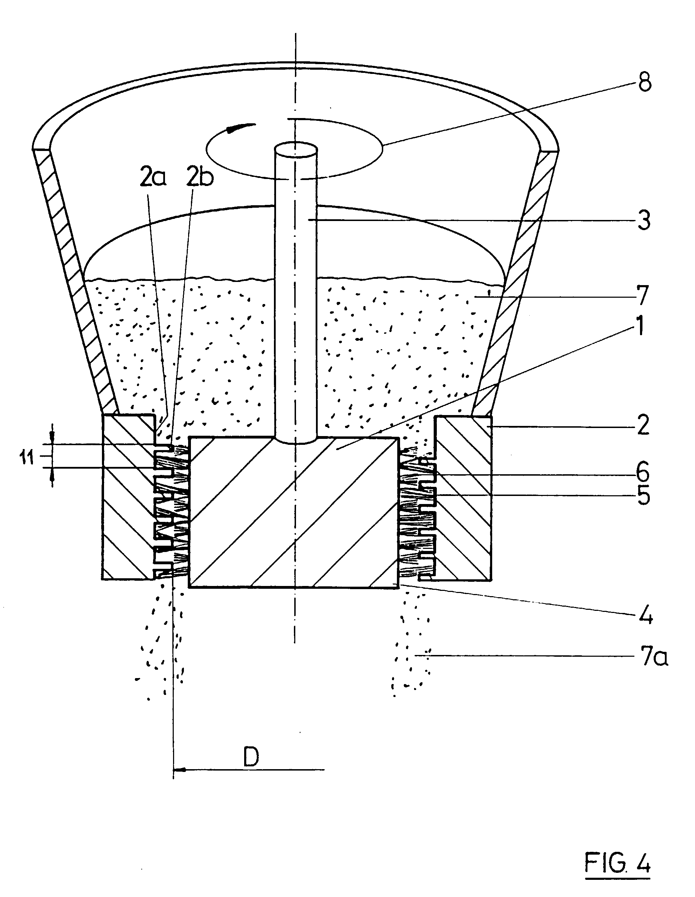

Bei den nachfolgenden Erläuterungen eines Ausführungsbeispiels der Erfindung wird gewichtig auf Fig. 4 abgestellt, wobei bei Bedarf auf die übrigen Figuren verwiesen wird, welche an sich eine klarende Wirkung entfalten sollen.

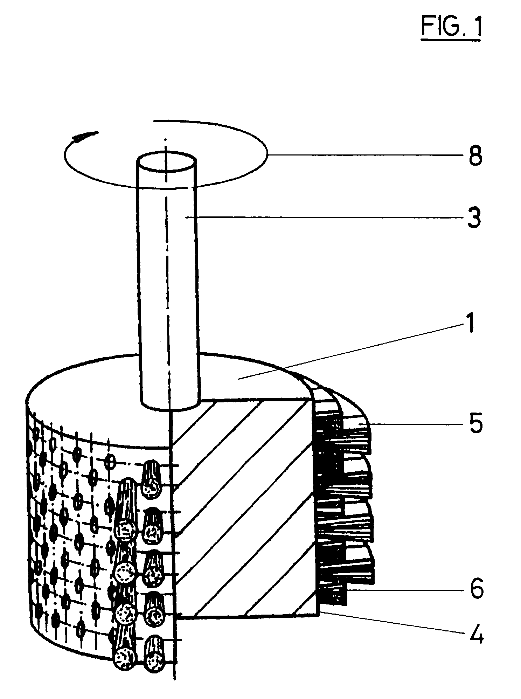

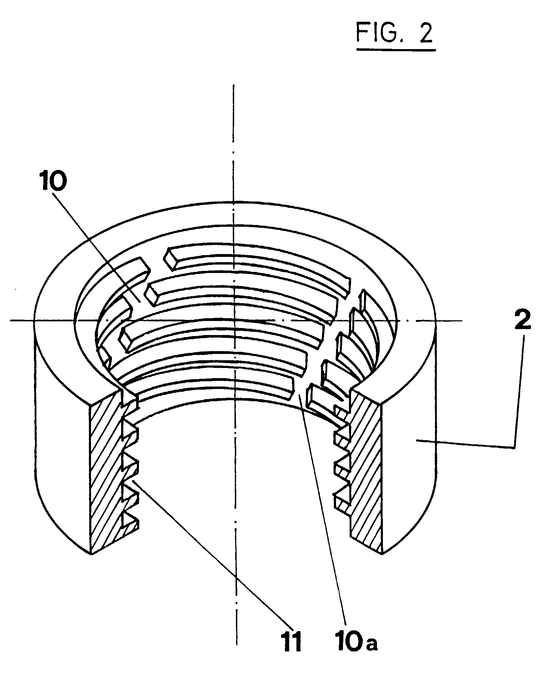

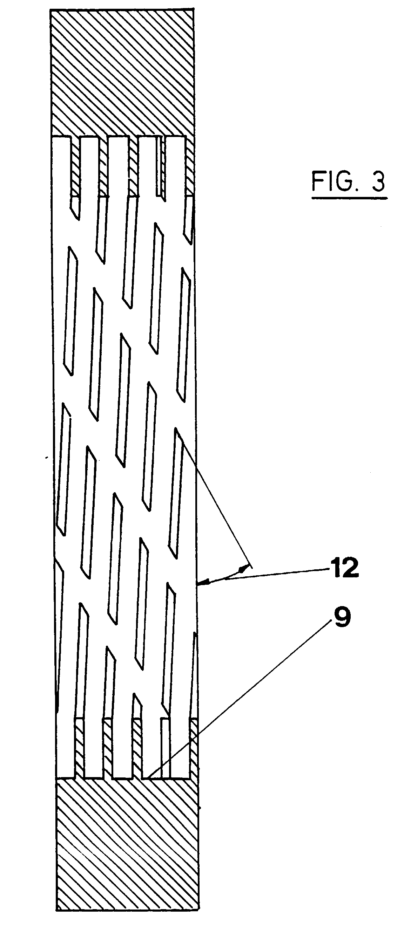

Fig 4 zeigt eine Fördereinrichtung für Schüttgüter, welche aus einem feststehenden Teil in Form einer Hülse 2 (siehe Fig. 2) und aus einem sich drehenden Teil 1 (siehe Fig. 1) besteht. Die Hülse 2 bleibt während des Betriebes am jeweiligen Plazierungsort durch eine lösbare oder feste Verbindung verankert; der sich drehende Teil 1 weist in axialer Richtung keinen Freiheitsgrad auf. Selbstverständlich besteht auch die Möglichkeit, diese Konfiguration bezüglich der Rotationshilfe, umgekehrt zu gestalten. Zu diesem Zweck weist der sich drehende Teil 1 einen Einspannbolzen3 auf, der mit einem nicht dargestellten Motor kraftschlüssig gekoppelt ist. Dieser Motor ist vorzugsweise mit einem Variator ausgerüstet, um über eine Drehzahlvariierung die aufgabengemässe Dosierung eines bestimmten Schüttgutes zu bewerkstelligen. Selbstverständlich können auch bezüglich Drehzahlvariierung ähnliche Aggregate zum Einsatz gelangen. Ist mit einer Fördereinrichtung eine konstante Menge eines Schüttgutes über eine längere Zeitspanne zu erbringen, so lässt sich ohne weiteres eine Antriebsvorrichtung mit einer permanenten Drehzahl vorsehen. Der sich drehende Teil 1 setzt sich aus dem Einspannbolzen 3 und einem zylindrischen Borstenkern 4 zusammen: Letztgenannter weist auf der Mantelfläche mehrere aus einer Vielzahl von Fasern bestehende einzelne Borstenbündel 5, 6 auf. Die Borstenbündel 5, 6 sind in axialer Ebene des Borstenkerns 4 in zueinander beabstandeten Reihen mit abwechselnd hohen 5 und flachen 6 Borstenbündelreihen angeordnet. Diese Borstenbündel können nach Bedarf ohne weiteres durch einzelne noppenartige Körper aus einem flexiblen Material, beispielsweise Gummi, ersetzt werden. Der Borstenkern 4 rotiert in der Hülse 2, die innenseitig mit einer Gewindenut 9 (siehe Fig. 3) versehen ist. Innendurchmesser 2b und Aussendurchmesser 2a der Gewindenut 9 entsprechen den jeweiligen Durchmessern der Borstenbündel : Die hohen Borstenbündel 5 entsprechen dem Innendurchmesser 2b, die flachen Borstenbündel 6 dem Aussendurchmesser 2a der Gewindenut 9. Die letztgenannten Borstenbündel 6 zentrieren somit den Borstenkern 4 gegenüber dem Aussendurchmesser 2a der Gewindenut 9 und dichten somit den lichten Innendurchmesser D der Hülse 2 gegen das nachströmende Schüttgut 7 von oben ab. Entgegengesetzt zur Richtung der Ganghöhe oder Steigung der Gewindenut 9 befinden sich in Umfangsrichtung verteilt eine oder mehrere Ausgleichsnuten 10 (siehe Fig. 2), welche einen im wesentlichen spitzen Winkel zur Bohrungsachse der Hülse 2 aufweisen. Werden mehrere Ausgleichsnuten 10 vorgesehen, so sind sie in Umfangsrichtung regelmässig verteilt. Borstenbündeldrehzahl und Querschnittsabmessung der Gewindenut 9 bestimmen die Fördermenge des jeweiligen Schüttgutes 7. In radialem Abstand von einem Borstenbündel 5 zum andern ist das zu fördernde Gut 7 eingelagert und wird entlang des ersten Gewindeganges gefördert. Durch die Steigung 11 der Gewindenut 9 werden die geradlinig und radial angeordneten Borstenbündel 5 während der Rotation 8 des Borstenkerns 4 zwangsläufig verbogen. Um ihre ursprüngliche Form wieder einzunehmen, nutzen diese Borstenbündel 5 die nachfolgende Ausgleichsnut 10 als Rückfederungsweg aus und federn dabei in die nächst höhere Gewindenut, wo sie ihre Transportaufgaben fortsetzen. Das zu fördernde Gut wird so sukzessiv durch die gesamte Hülse 2 transportiert. Die Materialien der Borstenbündel, die Steigung 11 der Gewindenut 9, die Breite dieser Nut (siehe Fig. 2) sowie die Anzahl der Ausgleichsnuten 10 sind so gewählt, dass die zulässige Flexibilitat der Borsten nicht überschritten wird, sie nehmen somit nach dieser Ausgleichsbewegung wieder ihre ursprüngliche Form an. Durch diese Ausgleichsbewegung, charakterisiert durch ein Zurückschnellen der Fasern der Borstenbündel, wird eine Selbstreinigung der Borstenbündel 5 sowie auch der Ausgleichsnuten 10 sichergestellt.

Der Winkel 12 (siehe Fig. 3) der Ausgleichsnut 10 gegenüber der Bohrungsachse der Hülse 2 ist so gewählt, dass die senkrecht oder wendelförmig angeordneten Borstenbündel 5 eine freie Fallbahn des zu fördernden Schüttgutes 7 verschliessen. Eine alternative Lösung besteht darin, die Ausgleichsnut 10 senkrecht anzuordnen, dafür aber einen entsprechenden gewindeähnlichen Verlauf der Borstenbündel 5 vorzusehen, welcher wiederum die freie Fallbahn des Schüttgutes unterbindet. Bei einer solchen Konfiguration beschreiben die Borstenbündel 5, 6 auf der Mantelfläche des Borstenkerns 4 schraubenförmige Bahnen.

Die Förderung des Schüttgutes 7, d.h. die Fördermenge 7a, setzt sich aus zwei Komponenten zusammen: Einerseits aus einer zwangsförderung, andererseits aus der vom Fliessvermögen des jeweiligen Gutes abhängigen freien Förderung.

Bei der Zangsförderung wird das Schüttgut 7 zwangsweise von dem Borstenbündel 5 entlang der Gewindenut 9 über die gesamte Länge innerhalb der Hülse 2 geführt.

Bei der freien Förderung fällt durch die untersten Entlastungsschlitze 10a (siehe Fig. 2) das zu fördernde Material 7 resp. 7a aus der Hülse 2. Dadurch wird der Füllungsgrad der darüberliegenden Nut vermindert und von der nächst höheren Gewindenut 9, über die Ausgleichsnuten 10, zum Teil ausgefüllt. Dieses Verhalten setzt sich auf die darüberliegende Gewindenut 9, entsprechend dem Fliessverhalten des jeweiligen zu fördernden Schüttgutes 7 fort.

Die gesamte Förderleistung setzt sich somit aus beiden genannten Komponenten zusammen, wobei dies selbstverständlich vom Fliessverhalten des jeweilig zu fördernden Schüttgutes 7 abhängig ist, wobei die gesamte Förderleistung im Extremfall lediglich aus einer Förderkomponente bestehen kann. Somit ergibt sich die Möglichkeit, die Zwangsförderung entgegengesetzt der zugrundegelegten Förderrichtung zu betreiben, wenn die Komponente aus der freien Förderung, aufgrund des Fliessverhaltens des jeweilig zu fördernden Schüttgutes 7, entsprechend gross ist. In diesem Fall lässt sich die Fördermenge 7a noch weiter heruntersetzen. Die gewählte Flexibilität der Borstenbündel 5 muss so gross sein, dass sie den Durchlauf einer bestimmten Sektorstrecke, im gegebenen Fall 120° des Umfanges, schadlos zu überstehen vermögen. Innerhalb der Gewindenut 9 sind sämtliche Kanten abgerundet, damit die Borstenbündel 5 nicht durch eine Ausfaserung verletzt werden und somit ihrer Aufgabe nicht mehr gerecht werden.

## Patentansprüche

1. Fördereinrichtung zur Dosierung eines Schüttgutes, wobei die Fördereinrichtung im wesentlichen aus einem äußeren Hohlkörper, der innenseitig ein Gewinde aufweist, und aus einem inneren Rotor besteht, der sich über wenigstens einen Teil der Axiallänge des Gewindes erstreckt, und wobei der Rotor Fördermittel aufweist, welche mit dem Gewinde in einer auf Förderung des Schüttgutes ausgelegten Wirkverbindung stehen,
**dadurch gekennzeichnet**, daß
a) das Gewinde durch mindestens eine Ausgleichsnut (10) unterbrochen ist;
b) die Fördermittel des Rotors (1) aus mehreren flexiblen Körpern (5, 6) bestehen, welche in axialer Ebene des Rotors in zueinander beabstandeten Reihen mit abwechselnd hohen und flachen Körpern angeordnet sind;
c) die hohen Körper (5) mit einer das Gewinde bildenden Gewindenut (9) und die flachen Körper (6) mit dem Innendurchmesser (D) des Hohlkörpers (2) im Bereich des Gewindes kämmen; und
d) durch die Ausgleichsnut jeweils eine Rückfederung der hohen, entlang der Gewindenut schüttgutfördernden Körper in die nächsthöhere Gewindenut auslösbar ist.

2. Fördereinrichtung nach Anspruch 1, dadurch gekennzeichnet, daß der mittlere Abstand der Reihen der hohen Körper (5) zueinander der Steigung (11) des Gewindes entspricht.

3. Fördereinrichtung nach den Ansprüchen 1 und 2, dadurch gekennzeichnet, daß die zueinander beabstandeten Reihen der hohen Körper (5) in Umfangsrichtung des Rotors (1) in einer Ebene liegen, und daß die Ausgleichsnut (10) gegenüber der Achse des Gewindes unter einem spitzen Winkel (12) verläuft.

4. Fördereinrichtung nach den Ansprüchen 1 und 2, dadurch gekennzeichnet, daß bei in Umfangsrichtung des Rotors (1) schräg verlaufenden Reihen der hohen Körper (5) die Ausgleichsnut (10) achsparallel mit dem Hohlkörper (2) im Bereich des Gewindes verläuft.

5. Fördereinrichtung nach einem der Ansprüche 1 bis 4, dadurch gekennzeichnet, daß die Körper (5, 6) aus Borstenbündeln bestehen.

## Claims

1. Conveying arrangement for metering a bulk material, the conveying arrangement consisting essentially of an outer hollow body which has a thread on the inside, and of an inner rotor which extends over at least a part of the axial length of the thread, the rotor having conveying means which are in an operative connection with the thread designed for conveying the bulk material, characterized in that
a) the thread is interrupted by at least one compensating groove (10);
b) the conveying means of the rotor (1) consist of a number of flexible bodies (5, 6) which are arranged in the axial plane of the rotor in mutually spaced rows with alternating high and low bodies;
c) the high bodies (5) mesh with a thread groove (9) forming the thread and the low bodies (6) mesh with the inner diameter (D) of the hollow body (2) in the region of the thread; and
d) a spring-back of the high bodies, which convey bulk material along the thread groove, into the next higher thread groove can be brought about in each case by means of the compensating groove.

2. Conveying arrangement according to Claim 1, characterized in that the average mutual spacing of the rows of high bodies (5) corresponds to the pitch (11) of the thread.

3. Conveying arrangement according to Claims 1 and 2, characterized in that the mutually spaced rows of high bodies (5) lie in a plane in the circumferential direction of the rotor (1), and in that the compensating groove (10) runs at an acute angle (12) in relation to the axis of the thread.

4. Conveying arrangement according to Claims 1 and 2, characterized in that, in the case of rows of high bodies (5) running obliquely in the circumferential direction of the rotor (1), the compensating groove (10) runs axially parallel to the hollow body (2) in the region of the thread.

5. Conveying arrangement according to one of Claims 1 to 4, characterized in that the bodies (5, 6) consist of bristle bundles.

## Revendications

1. Dispositif d'alimentation pour le dosage d'un produit en vrac, le dispositif d'alimentation étant constitué essentiellement d'un corps creux externe, qui présente un filetage sur sa face interne, et d'un rotor interne, qui s'étend sur au moins une partie de la longueur axiale du filetage, et le rotor présentant des moyens d'alimentation qui sont connectés fonctionnellement avec le filetage dans l'optique de l'alimentation du produit en vrac,
caractérisé en ce que
a) le filetage est interrompu par au moins une rainure d'égalisation (10);
b) les moyens d'alimentation du rotor (1) sont constitués de plusieurs corps flexibles (5, 6), qui sont disposés dans le plan axial du rotor en rangées espacées les unes des autres avec une alternance de corps hauts et plats;
c) les corps hauts (5) s'engrènent avec une rainure de filetage (9) formant le filetage et les corps plats (6) s'engrènent avec le diamètre interne (D) du corps creux (2) dans la région du filetage;
et
d) une détente élastique de chacun des corps hauts alimentant le produit en vrac le long de la rainure de filetage dans la rainure de filetage suivante plus haute peut être déclenchée par la rainure d'égalisation.

2. Dispositif d'alimentation selon la revendication 1, caractérisé en ce que la distance moyenne entre les rangées des corps hauts (5) correspond au pas (11) du filetage.

3. Dispositif d'alimentation selon les revendications 1 et 2, caractérisé en ce que les rangées des corps hauts (5) espacées les unes des autres se trouvent dans un plan dans la direction périphérique du rotor (1), et en ce que la rainure d'égalisation (10) s'étend à un angle aigu (12) par rapport à l'axe du filetage.

4. Dispositif d'alimentation selon les revendications 1 et 2, caractérisé en ce que dans le cas des rangées des corps hauts (5) s'étendant obliquement dans la direction périphérique du rotor (1), la rainure d'égalisation (10) s'étend parallèlement à l'axe du corps creux (2) dans la région du filetage.

5. Dispositif d'alimentation selon l'une quelconque des revendications 1 à 4, caractérisé en ce que les corps (5, 6) sont constitués de petites bottes de poils.
